(19) Europäisches Patentamt
European Patent Office
Office européen des brevets

(11) **EP 3 492 295 B1**

(12) **EUROPÄISCHE PATENTSCHRIFT**

(45) Veröffentlichungstag und Bekanntmachung des Hinweises auf die Patenterteilung:
**24.06.2020   Patentblatt 2020/26**

(51) Int Cl.:
**B60K 17/36** (2006.01)          **F16H 48/08** (2006.01)

(21) Anmeldenummer: **18201662.6**

(22) Anmeldetag: **22.10.2018**

(54) **ACHSGETRIEBESYSTEM**

**AXLE TRANSMISSION SYSTEM**

**SYSTÈME D'ENGRENAGE D'ESSIEU**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2017   DE 102017127583**

(43) Veröffentlichungstag der Anmeldung:
**05.06.2019   Patentblatt 2019/23**

(73) Patentinhaber: **MAN Truck & Bus SE**
**80995 München (DE)**

(72) Erfinder:
• **Braykoff, Christo**
**80997 München (DE)**
• **Schultheiß, Hansjörg**
**85258 Weichs (DE)**

(74) Vertreter: **v. Bezold & Partner Patentanwälte - PartG mbB**
**Akademiestraße 7**
**80799 München (DE)**

(56) Entgegenhaltungen:
**EP-A1- 3 045 339          DE-A1-102010 034 225**
**DE-A1-102010 052 278     JP-A- H08 337 125**
**US-A- 2 889 717**

**Beschreibung**

Die Erfindung betrifft eine Achsgetriebevorrichtung für ein Kraftfahrzeug, insbesondere Nutzfahrzeug.

Bei Fahrzeugen mit mehr als einer angetriebenen Hinter- oder Vorderachse kann ein sogenanntes Durchtriebgetriebe verwendet werden. Dieses Getriebe kann im Vergleich zu einem einfachen Achsgetriebe, wie zum Beispiel in einer Soloachse, zusätzlich ein Längsdifferential und eine Stirnradstufe aufweisen, um die erforderliche Leistungsverzweigung darzustellen. Damit bei der Geradeausfahrt keine Differenzdrehzahlen im Längsdifferential entstehen, und die Stirnradstufe im Durchtrieb typischerweise mit einer Übersetzung von i = 1,0 ausgeführt.

Ein Beispiel für mehrere angetriebene Vorder- oder Hinterachsen ist ein Achstandem. Ein Achstandem weist zwei Antriebsachsen auf. Eine erste Antriebsachse ist hierbei als Durchtrieb-Antriebsachse ausgebildet, die von einer Antriebseinheit, zum Beispiel einem Verbrennungsmotor, angetrieben wird und treibt gleichzeitig eine zweite Antriebsachse antreibt.

Die DE 10 2005 002 858 B4 offenbart eine Tandem-Achsanordnung. Eine Achse der Tandem-Achsanordnung weist miteinander kämmende Vorgelegeräder auf. Die Vorgelegeräder weisen gleiche Durchmesser und Zahnzahlen auf, so dass eine 1:1-Übersetzung gegeben ist. Damit können beide Achsen der Tandem-Achsanordnung einander entsprechende Querdifferentiale, Kegelritzel und Tellerräder aufweisen und eine Durchtriebswelle kann direkt über eine Gelenkwelle mit dem Kegelritzel der zweiten Achse antriebsgekoppelt sein.

Hier kann eine Übersetzung von i = 1,0 der Vorgelegeräder jedoch akustische Nachteile und Tragfähigkeitsnachteile mit sich bringen. Zusätzlich können Nachteile beim Bauraum aufgrund gleicher Kopfkreisdurchmesser beider Vorgelegeräder bestehen.

Die EP 3 045 339 A1 offenbart eine Tandemantriebsachsenbaugruppe. Eine vordere Hinterachse weist eine Eingangswelle, die sich um eine erste Drehachse dreht, und ein Kegelritzel, das sich um eine zweite Drehachse dreht, auf. Die Eingangswelle und das Kegelritzel sind über ein Stirnradpaar verbunden, wobei die Stirnräder eine unterschiedliche Zähnezahl aufweisen. Zwischen der vorderen Hinterachse und einer hinteren Hinterachse der Tandemantriebsachsenbaugruppe ist ein Zwischenachsendifferentialgetriebe zum Aufnehmen der Drehzahlunterschiede vorgesehen.

Eine Übersetzung der Vorgeleges von i ≠ 1,0 kann hier zu einer unerwünschten dauerhaften Drehzahldifferenz im Längsdifferential führen. Ein Fahren mit eingelegter Längssperre ist bei ungleicher Übersetzung von Durchtriebachse und Soloachse nicht möglich.

Die DE 10 2010 052278 A1 offenbart eine Kraftfahrzeugantriebsstrangvorrichtung mit wenigstens einem Hauptantriebsstrang zum Antrieb einer Haupt-Antriebsachse, mit wenigstens einem über den Hauptantriebsstrang angetriebenen Hilfsantriebsstrang und mit einer über den Hilfsantriebsstrang antreibbaren Neben-Antriebsachse, die zwei Radantriebswellen aufweist.

Zum weiteren Stand der Technik bezüglich einer Tandemachse wird auf die DE 10 2010 034225 A1, die JP H08 337125 A und die US 2 889 717 A verwiesen.

Der Erfindung liegt die Aufgabe zu Grunde, ein alternatives oder verbessertes Achsgetriebesystem zu schaffen, mit dem Nachteile im Stand der Technik überwunden werden können. Insbesondere soll das Achsgetriebesystem verbesserte akustische Eigenschaften, eine verbesserte Tragfähigkeit und/oder eine verbesserte Bauraumausnutzung aufweisen.

Die Aufgabe wird gelöst durch ein Achsgetriebesystem gemäß dem unabhängigen Anspruch. Vorteilhafte Weiterbildungen sind in den abhängigen Ansprüchen und der Beschreibung angegeben.

Das Achsgetriebesystem ist für ein Kraftfahrzeug, insbesondere Nutzfahrzeug, mit einer Antriebseinheit geeignet. Das Achsgetriebesystem weist eine erste Antriebsachse (erstes Achsgetriebe) zum trieblichen Verbinden mit der Antriebseinheit auf. Die erste Antriebsachse weist eine Vorgelegestufe mit einem Vorgelegeritzel und einem Vorgelegerad und eine erste Kegelradstufe mit einem Kegelritzel und einem Tellerrad auf. Das Achsgetriebesystem weist eine zweite Antriebsachse auf, die trieblich mit der ersten Antriebsachse verbunden ist und eine zweite Kegelradstufe mit einem Kegelritzel und einem Tellerrad aufweist. Eine Übersetzung der Vorgelegestufe ist ungleich 1. Eine Gesamtübersetzung der ersten Antriebsachse entspricht einer Gesamtübersetzung der zweiten Antriebsachse. Eine Zähnezahl des Vorgelegerads der Vorgelegestufe entspricht einer Zähnezahl des Tellerrads der zweiten Kegelradstufe, eine Zähnezahl des Kegelritzels der ersten Kegelradstufe entspricht einer Zähnezahl des Kegelritzels der zweiten Kegelradstufe und/oder eine Zähnezahl des Vorgelegeritzels der Vorgelegestufe entspricht einer Zähnezahl des Tellerrads der ersten Kegelradstufe. Vorliegend kann unter dem Begriff "Übersetzung" insbesondere das Verhältnis der Zähnezahlen zwischen dem angetriebenen Zahnrad und dem antreibenden Zahnrad verstanden werden ($n_{Zähne\_Abtrieb} / n_{Zähne\_Antrieb}$). Eine Gesamtübersetzung ergibt sich z. B. als Produkt aus jeweiligen Einzelübersetzungen zwischen Zahnradpaarungen.

Insbesondere ist das erste Vorgelege antreibend mit der ersten Kegelradstufe verbunden und/oder die erste Antriebsachse ist antreibend mit der zweiten Antriebsachse verbunden.

Die Übersetzung ungleich 1 des ersten Vorgeleges führt zu ungleichen Zähnezahlen eines Vorgelegeritzels und eines Vorgelegerads des Vorgeleges. Dies ist aus akustischen Gründen und Tragfähigkeitsgründen vorteilhaft. Aufgrund der ungleichen Zähnezahl ist gewährleistet, dass nicht immer die gleichen Zähne des Vorgelegeritzels und des Vorgelegerads miteinander kämmen. Weist beispielsweise ein Zahn des Vorgelegeritzels fertigungsbedingte Abweichungen auf, welche zu unerwünschten Spannungs- und/oder Pressungsüberhöhungen an den betroffenen Zähnen des Vorgelegeritzels sowie an den jeweiligen Zähnen des Vorgelegerades führen, die mit den betroffenen Zähnen des Vorgelegeritzels kämmen, so wird die schädigende Wirkung der Spannungs- und/oder Pressungsüberhöhungen auf mehrere Zähne des Vorgelegerades aufgeteilt. Mit anderen Worten gesagt, es wird verhindert, dass immer der gleiche Zahn des Vorgelegerads durch den fehlerhaften Zahn des Vorgelegeritzels geschädigt wird und umgekehrt. Dies erhöht die Tragfähigkeit des Vorgeleges über die Lebensdauer und führt zu geringeren akustischen Emissionen im Betrieb.

Zusätzlich kann gezielt Einfluss auf die Kopfkreisdurchmesser beider Zahnräder der Vorgelegestufe und so auf das Package genommen werden, um bspw. den Bauraum besser auszunutzen.

Entspricht eine Übersetzung der ersten Antriebsachse auf die Rädern der ersten Antriebsachse einer Übersetzung der zweiten Antriebsachse auf die Rädern der zweiten Antriebsachse, so kommt es zu keiner (ungewünschten und dauerhaften) Drehzahldifferenz im Längsdifferential des ersten Achsgetriebes. Das Längsdifferential ist i.d.R. nicht ausgelegt für einen dauerhaften Drehzahlausgleich, welcher durch eine Drehzahldifferenz zwischen der ersten und der zweiten Antriebsachse hervorgerufen wird. Eine dauerhafte Drehzahldifferenz kann somit zu einer Reduzierung der Lebensdauer des Längsdifferentials führen.

Zusätzlich wird ein vorteilhafter Auslegungsansatz für die Zähnezahlen der Vorgelegestufe, der ersten Kegelradstufe und der zweiten Kegelradstufe vorgeschlagen, bei dem eine Gesamtübersetzung der Vorgelegestufe und der ersten Kegelradstufe einer Übersetzung der zweiten Kegelradstufe entspricht.

In einer besonders bevorzugten Ausführungsform weist eine Zähnezahl des Vorgelegeritzels der Vorgelegestufe und eine Zähnezahl des Vorgelegerads der Vorgelegestufe keinen ganzzahligen gemeinsamen Teiler größer als 1,0 auf. Dies hat den Vorteil, dass alle Zähne des Vorgelegeritzels mit allen Zähnen des Vorgelegerads kämmen, sodass beispielsweise durch fehlerbehaftete Zähne des Vorgelegeritzels hervorgerufene Schädigungen auf alle Zähne des Vorgelegerads (gleichmäßig) verteilt werden können.

In einer weiteren Ausführungsform treibt das Vorgelegeritzel der Vorgelegestufe das Vorgelegerad der Vorgelegestufe an.

In einer weiteren Ausführungsform ist die Übersetzung der Vorgelegestufe größer als 1.

In einer Ausführungsform ist die Vorgelegestufe als eine Stirnradstufe ausgebildet.

In einer weiteren Ausführungsform ist die erste Antriebsachse als Durchtriebgetriebeachse ausgebildet.

In einem Ausführungsbeispiel ist die zweite Antriebsachse als Sologetriebeachse ausgebildet. Eine Sologetriebeachse dient lediglich zum Antrieb der direkt mit der Antriebsachse verbundenen Räder. Eine Weiterleitung (ein Durchtrieb) zu einer weiteren Antriebsachse ist nicht vorgesehen.

In einer Weiterbildung entspricht die Gesamtübersetzung der Vorgelegestufe und der ersten Kegelradstufe einer Übersetzung der zweiten Kegelradstufe.

In einer Ausführungsvariante ist das Achsgetriebesystem als eine Tandemachse, insbesondere eines Nutzfahrzeugs, ausgebildet.

Alternativ kann das Achsgetriebesystem mindestens eine weitere Antriebsachse aufweisen. Damit kann auch ein Achsgetriebesystem mit drei oder mehr angetriebenen Achsen (Achsgetrieben) die vorliegende Erfindung nutzen.

In einer weiteren Ausführungsform ist die mindestens eine weitere Antriebsachse zwischen der ersten Antriebsachse und der zweiten Antriebsachse angeordnet und/oder die Gesamtübersetzung der ersten Antriebsachse entspricht einer Gesamtübersetzung der mindestens einen weiteren Antriebsachse.

In einer Weiterbildung weist die mindestens eine weitere Antriebsachse eine weitere Vorgelegestufe und eine weitere Kegelradstufe auf. Die Gesamtübersetzung der ersten Vorgelegestufe und der ersten Kegelradstufe entspricht einer Gesamtübersetzung der weiteren Vorgelegestufe und der weiteren Kegelradstufe. Damit können die Vorgelegestufen und die Kegelradstufen beider Durchtriebsachsen als Gleichteile ausgebildet sein/gleich sein. Zusätzlich profitieren die Vorgelege von den Übersetzungen ungleich 1, sodass für die erste Antriebsachse und die zweite Antriebsachse die oben angegebenen Vorteile hinsichtlich der Akustik und der Tragfähigkeit erzielbar sind.

Insbesondere kann eine Übersetzung des ersten Vorgeleges einer Übersetzung des zweiten Vorgeleges entsprechen. Zusätzlich kann eine Übersetzung der ersten Kegelradstufe einer Übersetzung der zweiten Kegelradstufe entsprechen.

In einem Ausführungsbeispiel weist die erste Antriebsachse eine Eingangswelle zum trieblichen Verbinden mit der Antriebseinheit auf. Alternativ oder zusätzlich weist die erste Antriebsachse eine Durchgangswelle zum trieblichen Verbinden mit der zweiten Antriebsachse auf. Alternativ oder zusätzlich weist die erste Antriebsachse ein Längsdifferential, das vorzugsweise trieblich zwischen der Eingangswelle einerseits und der Durchgangswelle und dem Vorgelegestufe andererseits vorgesehen ist, auf.

Zusätzlich können die erste Antriebsachse, die zweite Antriebsachse und/oder jede weitere Antriebsachse (soweit vorhanden) jeweils ein Querdifferential und Räder aufweisen. Die Kegelradstufe der jeweiligen Antriebsachse kann antreibend mit dem Querdifferential verbunden sein, das wiederum antreibend über Radwellen mit den Rädern verbunden sein kann.

Insbesondere kann die erste Kegelradstufe und/oder die zweite Kegelradstufe (soweit vorhanden) geradverzahnte, schrägverzahnte, doppelschrägverzahnte, bogenverzahnte (Spiral- oder Hypoid-) Kegelräder oder auch nach einer anderen beliebigen Verzahnungsart ausgeführte Zahnräder aufweisen.

Vorzugsweise kann die Vorgelegestufe geradverzahnte, schrägverzahnte, doppelschrägverzahnte oder auch nach einer anderen beliebigen Verzahnungsart ausgeführte Zahnräder aufweisen.

Die Erfindung betrifft auch ein Kraftfahrzeug, insbesondere Nutzfahrzeug (zum Beispiel Omnibus oder Lastkraftwagen), mit einem Achsgetriebesystem wie hierin offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

Figur 1    eine Prinzipskizze eines beispielhaften Achsgetriebesystems gemäß der vorliegenden Offenbarung; und

Figur 2    eine Prinzipskizze eines weiteren beispielhaften Achsgetriebesystems gemäß der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

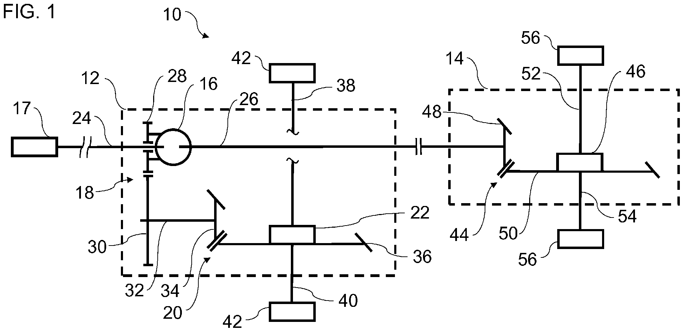

Die Figur 1 zeigt ein Achsgetriebesystem 10. Das Achsgetriebesystem 10 kann in einem Kraftfahrzeug, insbesondere in einem Nutzfahrzeug, umfasst sein. Beispielsweise kann das Achsgetriebesystem 10 als eine Tandemachsgetriebevorrichtung eines Lastkraftwagens oder eines Omnibusses eingesetzt werden. Das Achsgetriebesystem 10 weist eine erste Antriebsachse (ein erstes Achsgetriebe) 12 und eine zweite Antriebsachse (ein zweites Achsgetriebe) 14 auf.

Die erste Antriebsachse 12 weist ein Längsdifferential 16, eine Vorgelegestufe 18, eine erste Kegelradstufe 20 und ein erstes Querdifferential 22 auf.

Eine Antriebseinheit 17, zum Beispiel ein Elektromotor oder ein Verbrennungsmotor, ist antreibend mit einer Eingangswelle 24 der ersten Antriebsachse 12 verbunden. Die Eingangswelle 24 ist antreibend mit dem Längsdifferential 16 verbunden. Die Eingangswelle 24 erstreckt sich in einer Fahrzeuglängsrichtung.

Die erste Antriebsachse 12 ist als ein Durchtriebachsgetriebe ausgebildet. Um als Durchtrieb zu funktionieren, weist die erste Antriebsachse 12 das Längsdifferential 16 und eine Durchtriebswelle 26 auf. Das Längsdifferential 16 verteilt die Antriebskraft auf die Vorgelegestufe 18 und die Durchtriebswelle 26. Die Durchtriebswelle 26 ist über eine Kupplung antreibend mit einer Eingangswelle der zweiten Antriebsachse 14 verbunden. Die Durchtriebswelle 26 erstreckt sich in einer Fahrzeuglängsrichtung.

Es ist auch ein Achsgetriebesystem ohne Längsdifferential denkbar. Die erste Antriebsachse kann dann über eine Welle mit der zweiten Antriebsachse verbunden sein. Das heißt, dass kein Drehzahlausgleich zwischen den beiden Achsen auf konventionellem Wege über ein Längsdifferential möglich ist. Die Wichtigkeit der Erfindung ist bei einer derartigen Konfiguration besonders hoch.

Die erste Antriebsachse 12 kann zusätzlich ein als Sperre (Längsdifferentialsperre) wirkendes Schaltelement (nicht dargestellt) aufweisen. Das Schaltelement kann eine direkte Antriebsverbindung zwischen der Eingangswelle 24 und der Vorgelegestufe 18 herstellen. Das Schaltelement kann beispielsweise als Klauenkupplung ausgebildet sein.

Die Vorgelegestufe 18 ist als eine Stirnradstufe ausgebildet. Die Vorgelegestufe 18 weist ein Vorgelegeritzel 28 und ein Vorgelegerad 30 auf. Das Vorgelegeritzel 28 wird über das Längsdifferential 16 angetrieben. Bei einer Differenzdrehzahl zwischen dem Vorgelegeritzel 28 und der Durchtriebswelle 26 von $\Delta n = 0$ (und auch bei $\Delta n \neq 0$) teilt sich das eingebrachte Drehmoment im normalen Betrieb zu gleichen Teilen auf das Vorgelegeritzel 28 und die Durchtriebswelle 26 auf. Das Vorgelegeritzel 28 kämmt mit dem Vorgelegerad 30. Das Vorgelegerad 30 ist über eine Zwischenwelle 32 antreibend mit der ersten Kegelradstufe 20 verbunden. Die Zwischenwelle 32 ist parallel zu der Eingangswelle 24 und der Durchtriebswelle 26 angeordnet.

Die erste Kegelradstufe 20 weist ein erstes Kegelritzel 34 und ein erstes Tellerrad 36 auf. Das erste Kegelritzel 34 kämmt mit dem ersten Tellerrad 36. Die erste Kegelradstufe 20 lenkt die von der Zwischenwelle 32 bereitgestellte Kraft um ungefähr 90° über das erste Querdifferential 22 auf Radwellen 38 und 40 um. In einigen Ausführungsformen können die Zwischenwelle 32 und das erste Kegelritzel 34 der Kegelradstufe 20 als integrale Einheit in Form einer Kegelritzelwelle ausgebildet sein. Die erste Kegelradstufe 20 kann bspw. geradverzahnte, schrägverzahnte oder bogenverzahnte (Spiral- oder Hypoid-) Kegelräder aufweisen. Die Radwellen 38 und 40 treiben Räder 42 des Kraftfahrzeugs an.

Die zweite Antriebsachse 14 weist eine zweite Kegelradstufe 44 und ein zweites Querdifferential 46 auf. Die zweite Antriebsachse 14 ist als Sologetriebeachse ausgebildet. Mit anderen Worten gesagt, die zweite Antriebsachse 14 überträgt das empfangene Drehmoment lediglich auf die an der zweiten Antriebsachse 14 angebrachten Räder 56.

Die zweite Kegelradstufe 44 weist ein zweites Kegelritzel 48 und ein zweites Tellerrad 50 auf. Die Durchtriebswelle 26 ist antreibend mit dem zweiten Kegelritzel 48 verbunden. Das zweite Kegelritzel 48 kämmt mit dem zweiten Tellerrad 50. Die zweite Kegelradstufe 44 lenkt die von der Durchtriebswelle 26 bereitgestellte Kraft um ungefähr 90° über das zweite Querdifferential 46 auf Radwellen 52 und 54 um. Die zweite Kegelradstufe 44 kann bspw. geradverzahnte, schrägverzahnte oder bogenverzahnte (Spiral- oder Hypoid-) Kegelräder aufweisen. Die Radwellen 52 und 54 treiben die Räder 56 des Kraftfahrzeugs an.

Gemäß der vorliegenden Offenbarung wird ein Auslegungsansatz für die Übersetzungen der ersten Antriebsachse 12 und der zweiten Antriebsachse 14 vorgeschlagen. Der Auslegungsansatz bietet gegenüber herkömmlichen Ansätzen akustische Vorteile und Tragfähigkeitsvorteile. Bei einer Übersetzung ungleich 1 der Vorgelegestufe 18 kann zusätzlich gezielt Einfluss auf die Kopfkreisdurchmesser beider Zahnräder der Vorgelegestufe 18 und so auf das Package genommen werden, um bspw. den Bauraum besser auszunutzen.

Es wird vorgeschlagen, die Vorgelegestufe 18, d.h. die Stirnradstufe der ersten Antriebsachse 12, mit einer Übersetzung von $i_{vorgelege} \neq 1,0$ zu versehen. Gleichzeitig sollen die Übersetzungen der ersten Kegelradstufe 20 und der zweiten Kegelradstufe 44 so ausgeführt werden, dass eine Gesamtübersetzung der Vorgelegestufe 18 und der ersten Kegelradstufe 20 einer Übersetzung der zweiten Kegelradstufe 44 entspricht. Dadurch kommt es zu keiner unerwünschten dauerhaften Drehzahldifferenz im Längsdifferential 16.

Der beispielhaft vorgeschlagene Auslegungsansatz umfasst die folgenden Verhältnisse und Beziehungen der Zähnezahlen des ersten Achsgetriebes 12 und des zweiten Achsgetriebes 14.

$$(1) \qquad z_{Vorgelegeritzel\ (28)} \neq z_{Vorgelegerad\ (30)}$$

D.h., die Zähnezahl des Vorgelegeritzels 28 der Vorgelegestufe 18 ist ungleich der Zähnezahl des Vorgelegerads 30 des Vorgeleges 18.

$$(2) \qquad z_{Vorgelegeritzel\ (28)} = z_{erstes\ Tellerrad\ (36)}$$

D.h., die Zähnezahl des Vorgelegeritzels 28 der Vorgelegestufe 18 ist gleich der Zähnezahl des ersten Tellerrads 36 der ersten Kegelradstufe 20.

$$(3) \qquad z_{Vorgelegerad\ (30)} = z_{zweites\ Tellerrad\ (50)}$$

D.h., die Zähnezahl des Vorgelegerads 30 der Vorgelegestufe 18 ist gleich der Zähnezahl des zweiten Tellerrads 50 der zweiten Kegelradstufe 44.

$$(4) \qquad z_{zweites\ Kegelritzel\ (48)} = z_{erstes\ Kegelritzel\ (34)}$$

D.h., die Zähnezahl des zweiten Kegelritzels 48 der zweiten Kegelradstufe 44 ist gleich der Zähnezahl des ersten Kegelritzels 34 der ersten Kegelradstufe 20.

Damit weisen die Antriebsachsen 12 und 14 die gleichen Übersetzungen auf, wobei die Vorgelegestufe 18 der ersten Antriebsachse 12 eine Übersetzung ungleich 1 aufweist.

Beispielhaft kann die folgende Konfiguration gewählt werden. Das Vorgelegeritzel 28 kann 38 Zähne aufweisen ($z_{Vorgelegeritzel\ (28)} = 38$). Das Vorgelegerad 30 kann 37 Zähne aufweisen ($z_{Vorgelegerad\ (30)} = 37$). Das erste Kegelritzel 34 kann 13 Zähne aufweisen ($z_{erstes\ Kegelrit-zel\ (34)} = 13$). Das erste Tellerrad kann 38 Zähne aufweisen($z_{erstes\ Tellerrad\ (36)} = 38$). Das zweite Kegelritzel 48 kann 13 Zähne aufweisen ($z_{zweites\ Kegelritzel\ (48)} = 13$). Das zweite Tellerrad 50 kann 37 Zähne aufweisen ($z_{zweites\ Tellerrad\ (50)} = 37$).

Der Auslegungsansatz ermöglicht, dass in der Vorgelegestufe 18 nicht immer die gleichen Zähne des Vorgelegeritzels 28 und des Vorgelegerads 30 miteinander kämmen. Wenn zusätzlich die Zähnezahl des Vorgelegeritzels 28 und die Zähnezahl des Vorgelegerads 30 keinen ganzzahligen gemeinsamen Teiler größer als 1 haben, kämmt jeder Zahn des Vorgelegeritzels 28 mit jedem Zahn des Vorgelegerads 30.

Würden hingegen, wie herkömmlich, das Vorgelegeritzel und das Vorgelegerad der Vorgelegestufe die gleiche Zähnezahl aufweisen, könnte es zu akustischen Nachteilen und Tragfähigkeitsnachteilen kommen. Käme es bei der Fertigung des Vorgelegeritzels oder des Vorgelegerads beispielsweise zu Ungenauigkeiten, die zu Teilungsabweichungen führen würden, so würden die resultierenden erhöhten Lasten immer die gleichen, miteinander kämmenden Zähne des Vorgelegeritzels und des Vorgelegerads betreffen. Dies kann über die Lebensdauer des Achsgetriebesystems zu einem erhöhten Verschleiß führen und akustisch (als störend) wahrnehmbar sein.

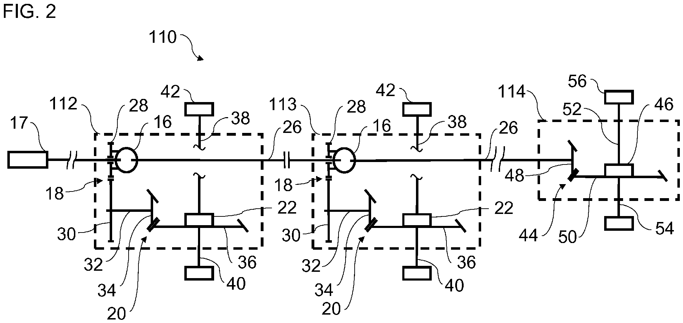

Der hierin vorgestellte Auslegungsansatz ist auf Achsgetriebesysteme mit beliebig vielen angetriebenen Achsen anwendbar. Beispielhaft ist in Figur 2 ein Achsgetriebesystem 110 mit drei Antriebsachsen dargestellt. Die drei Antriebsachsen weisen zwei Durchtriebgetriebeachsen und eine Sologetriebeachse auf. Es ist allerdings auch möglich, zusätzliche Durchtriebgetriebeachsen zur Erhöhung der Anzahl der Antriebsachsen vorzusehen.

Das Achsgetriebesystem 110 weist eine erste Antriebsachse 112, eine zweite Antriebsachse 113 und eine dritte Antriebsachse 114 auf.

Die erste Antriebsachse (erstes Achsgetriebe) 112 und die zweite Antriebsachse (zweites Achsgetriebe) 113 des Achsgetriebesystems 110 sind als Durchtriebantriebsachsen ausgebildet. Insbesondere können die Antriebsachsen 112 und 113 des Achsgetriebesystems 110 wie die erste Antriebsachse 12 des Achsgetriebesystems 10 von Figur 1 ausgebildet sein, wie dies anhand der gleichen Bauteile mit den gleichen Bezugsnummern in Figur 2 gekennzeichnet ist. Die erste Antriebsachse 112 ist antreibend mit der zweiten Antriebsachse 113 verbunden. Die zweite Antriebsachse 113 ist antreibend mit der dritten Antriebsachse 114 verbunden.

Die dritte Antriebsachse 114 ist als Soloantriebsachse ausgebildet. Insbesondere kann die dritte Antriebsachse 114 des Achsgetriebesystems 110 wie die zweite Antriebsachse 14 des Achsgetriebesystems 10 von Figur 1 ausgebildet sein, wie dies ebenfalls anhand der gleichen Bauteile mit den gleichen Bezugsnummern in Figur 2 gekennzeichnet ist.

Die Gesamtübersetzungen der Antriebsachsen 112, 113 und 114 sind gleich. Die Übersetzung der Vorgelegestufe 18 der ersten Antriebsachse 112 entspricht einer Übersetzung der Vorgelegestufe 18 der zweiten Antriebsachse 113. Die Übersetzung der Kegelradstufe 20 der ersten Antriebsachse 112 entspricht einer Übersetzung der Kegelradstufe 20 der zweiten Antriebsachse 113. Die Gesamtübersetzung der Vorgelegestufe 18 und der Kegelradstufe 20 der ersten Antriebsachse 112 und die Gesamtübersetzung der Vorgelegestufe 18 und der Kegelradstufe 20 der zweiten Antriebsachse 113 entsprechen einer Übersetzung der Kegelradstufe 44 der dritten Antriebsachse 114.

**Bezugszeichenliste**

| | |
|---|---|
| 10 | Achsgetriebesystem |
| 12 | Erste Antriebsachse (erstes Achsgetriebe) |
| 14 | Zweite Antriebsachse (zweites Achsgetriebe) |
| 16 | Längsdifferential |
| 17 | Antriebseinheit |
| 18 | Vorgelegestufe |
| 20 | Erste Kegelradstufe |
| 22 | Erstes Querdifferential |
| 24 | Eingangswelle |
| 26 | Durchtriebswelle |
| 28 | Vorgelegeritzel |
| 30 | Vorgelegerad |
| 32 | Zwischenwelle (Kegelritzelwelle) |
| 34 | Erstes Kegelritzel |
| 36 | Erstes Tellerrad |
| 38 | Radwelle |
| 40 | Radwelle |
| 42 | Rad |
| 44 | Zweite Kegelradstufe |
| 46 | Zweites Querdifferential |
| 48 | Zweites Kegelritzel |
| 50 | Zweites Tellerrad |
| 52 | Radwelle |
| 54 | Radwelle |
| 56 | Rad |
| 110 | Achsgetriebevorrichtung |
| 112 | Erste Antriebsachse (erstes Achsgetriebe) |
| 113 | Zweite Antriebsachse (zweites Achsgetriebe) |
| 114 | Dritte Antriebsachse (drittes Achsgetriebe) |

**Patentansprüche**

1. Achsgetriebesystem (10; 110) für ein Kraftfahrzeug, insbesondere ein Nutzfahrzeug, mit einer Antriebseinheit (17), aufweisend:

   eine erste Antriebsachse (12; 112) zum trieblichen Verbinden mit der Antriebseinheit (17), wobei die erste Antriebsachse (12; 112) eine Vorgelegestufe (18) mit einem Vorgelegeritzel (28) und einem Vorgelegerad (30) und eine erste Kegelradstufe (20) mit einem Kegelritzel (34) und einem Tellerrad (36) aufweist; und
   eine zweite Antriebsachse (14; 113), die trieblich mit der ersten Antriebsachse (12; 112) verbunden ist und eine zweite Kegelradstufe (44) mit einem Kegelritzel (48) und einem Tellerrad (50) aufweist, wobei:

   eine Übersetzung der Vorgelegestufe (18) ungleich 1 ist; und
   eine Gesamtübersetzung der ersten Antriebsachse (12; 112) einer Gesamtübersetzung der zweiten Antriebsachse (14; 113) entspricht,

   **dadurch gekennzeichnet, dass**
   eine Zähnezahl des Vorgelegerads (30) der Vorgelegestufe (18) einer Zähnezahl des Tellerrads (50) der zweiten Kegelradstufe (44), eine Zähnezahl des Kegelritzels (34) der ersten Kegelradstufe (20) einer Zähnezahl des Kegelritzels (48) der zweiten Kegelradstufe (44) und/oder eine Zähnezahl des Vorgelegeritzels (28) der Vorgelegestufe (18) einer Zähnezahl des Tellerrads (36) der ersten Kegelradstufe (20) entspricht.

2. Achsgetriebesystem (10; 110) nach Anspruch 1, wobei:
   eine Zähnezahl des Vorgeleritzels (28) der Vorgelegestufe (18) und eine Zähnezahl des Vorgelegerads (30) der Vorgelegestufe (18) keinen ganzzahligen gemeinsamen Teiler größer als 1,0 aufweisen.

3. Achsgetriebesystem (10; 110) nach Anspruch 1 oder Anspruch 2, wobei:
   das Vorgeleritzel (28) der Vorgelegestufe (18) das Vorgelegerad (30) der Vorgelegestufe (18) antreibt.

4. Achsgetriebesystem (10; 110) nach einem der vorherigen Ansprüche, wobei:
   die Übersetzung der Vorgelegestufe (18) größer als 1 ist.

5. Achsgetriebesystem (10; 110) nach einem der vorherigen Ansprüche, wobei:
   die Vorgelegestufe (18) als eine Stirnradstufe ausgebildet ist.

6. Achsgetriebesystem (10; 110) nach einem der vorherigen Ansprüche, wobei:
   die erste Antriebsachse (12; 112) als Durchtriebgetriebeachse ausgebildet ist.

7. Achsgetriebesystem (10; 110) nach einem der vorherigen Ansprüche, wobei:
   die zweite Antriebsachse (14) als Sologetriebeachse ausgebildet ist.

8. Achsgetriebesystem (10; 110) nach einem der vorherigen Ansprüche, wobei:
   die Gesamtübersetzung der Vorgelegestufe (18) und der ersten Kegelradstufe (20) einer Übersetzung der zweiten Kegelradstufe (44) entspricht.

9. Achsgetriebesystem (10; 110) nach einem der vorherigen Ansprüche, wobei die Achsgetriebevorrichtung (10) als eine Tandemachse, insbesondere eines Nutzfahrzeugs, ausgebildet ist.

10. Achsgetriebesystem (110) nach einem der Ansprüche 1 bis 9, ferner aufweisend:
    mindestens eine weitere Antriebsachse (113), die als Durchtriebgetriebeachse ausgebildet ist.

11. Achsgetriebesystem (110) nach Anspruch 10, wobei:
    die mindestens eine weitere Antriebsachse (113) zwischen der ersten Antriebsachse und der zweiten Antriebsachse angeordnet ist.

12. Achsgetriebesystem (110) nach Anspruch 10 oder Anspruch 11, wobei:
    die Gesamtübersetzung der ersten Antriebsachse (112) einer Gesamtübersetzung der mindestens einen weiteren Antriebsachse (113) entspricht.

**13.** Achsgetriebesystem (110) nach einem der Ansprüche 10 bis 12, wobei:

die mindestens eine weitere Antriebsachse (113) eine weitere Vorgelegestufe (18) und eine weitere Kegelradstufe (20) aufweist; und
die Gesamtübersetzung der Vorgelegestufe (18) und der ersten Kegelradstufe (20) einer Gesamtübersetzung der weiteren Vorgelegestufe (18) und der weiteren Kegelradstufe (20) entspricht.

**14.** Achsgetriebesystem (10; 110) nach einem der vorherigen Ansprüche, wobei die erste Antriebsachse (12; 112) aufweist:

eine Eingangswelle (24) zum trieblichen Verbinden mit der Antriebseinheit (17); und/oder
eine Durchgangswelle (26) zum trieblichen Verbinden mit der zweiten Antriebsachse (14; 113); und/oder
ein Längsdifferential (16), das vorzugsweise trieblich zwischen der Eingangswelle (24) einerseits und der Durchgangswelle (26) und der Vorgelegestufe (18) andererseits vorgesehen ist.

**15.** Kraftfahrzeug, insbesondere Nutzfahrzeug, mit einer Achsgetriebesystem (10; 110) nach einem der vorherigen Ansprüche.

**Claims**

**1.** An axle gear system (10; 110) for a motor vehicle, in particular a commercial vehicle, with a drive unit (17), having:

a first drive axle (12; 112) for drive-connecting to the drive unit (17), the first drive axle (12; 112) having an intermediate stage (18) with an intermediate pinion (28) and an intermediate gear (30) and a first bevel gear stage (20) with a bevel pinion (34) and a ring gear (36); and
a second drive axle (14; 113) which is drive-connected to the first drive axle (12; 112), and has a second bevel gear stage (44) with a bevel pinion (48) and a ring gear (50) :

a transmission ratio of the intermediate stage (18) not being equal to 1; and
an overall transmission ratio of the first drive axle (12; 112) corresponding to an overall transmission ratio of the second drive axle (14; 113),
**characterized in that**
a number of teeth of the intermediate gear (30) of the intermediate stage (18) corresponds to a number of teeth of the ring gear (50) of the second bevel gear stage (44), a number of teeth of the bevel pinion (34) of the first bevel gear stage (20) corresponds to a number of teeth of the bevel pinion (48) of the second bevel gear stage (44), and/or a number of teeth of the intermediate pinion (28) of the intermediate stage (18) corresponds to a number of teeth of the ring gear (36) of the first bevel gear stage (20).

**2.** The axle gear system (10; 110) according to Claim 1:
a number of teeth of the intermediate pinion (28) of the intermediate stage (18) and a number of teeth of the intermediate gear (30) of the intermediate stage (18) not having an integral common factor greater than 1.0.

**3.** The axle gear system (10; 110) according to Claim 1 or Claim 2:
the intermediate pinion (28) of the intermediate stage (18) driving the intermediate gear (30) of the intermediate stage (18).

**4.** The axle gear system (10; 110) according to one of the preceding claims:
the transmission ratio of the intermediate stage (18) being greater than 1.

**5.** The axle gear system (10; 110) according to one of the preceding claims:
the intermediate stage (18) being configured as a spur gear stage.

**6.** The axle gear system (10; 110) according to one of the preceding claims:
the first drive axle (12; 112) being configured as a through-connected gear axle.

**7.** The axle gear system (10; 110) according to one of the preceding claims:
the second drive axle (14) being configured as a solo gear axle.

8. The axle gear system (10; 110) according to one of the preceding claims:
the overall transmission ratio of the intermediate stage (18) and the first bevel gear stage (20) corresponding to a transmission ratio of the second bevel gear stage (44) .

9. The axle gear system (10; 110) according to one of the preceding claims, the axle drive apparatus (10) being configured as a tandem axle, in particular of a commercial vehicle.

10. The axle gear system (110) according to one of Claims 1 to 9, having, furthermore:
at least one further drive axle (113) which is configured as a through-connected gear axle.

11. The axle gear system (110) according to Claim 10:
the at least one further drive axle (113) being arranged between the first drive axle and the second drive axle.

12. The axle gear system (110) according to Claim 10 or Claim 11:
the overall transmission ratio of the first drive axle (112) corresponding to an overall transmission ratio of the at least one further drive axle (113).

13. The axle gear system (110) according to one of Claims 10 to 12:

the at least one further drive axle (113) having a further intermediate stage (18) and a further bevel gear stage (20); and
the overall transmission ratio of the intermediate stage (18) and the first bevel gear stage (20) corresponding to an overall transmission ratio of the further intermediate stage (18) and the further bevel gear stage (20) .

14. The axle gear system (10; 110) according to one of the preceding claims, the first drive axle (12; 112) having:

an input shaft (24) for drive-connecting to the drive unit (17); and/or
a through shaft (24) for drive-connecting to the second drive axle (14; 113); and/or
a longitudinal differential (16) which is preferably provided in drive terms between firstly the input shaft (24) and secondly the through shaft (26) and the intermediate stage (18).

15. Motor vehicle, in particular commercial vehicle, with an axle drive system (10; 110) according to one of the preceding claims.

**Revendications**

1. Système de transmission d'essieu (10 ; 110) pour un véhicule automobile, en particulier un véhicule utilitaire, comprenant une unité d'entraînement (17), comprenant :

un premier essieu moteur (12 ; 112) destiné à être relié par entraînement à l'unité d'entraînement (17), dans lequel le premier essieu moteur (12 ; 112) comprend un étage intermédiaire (18) doté d'un pignon intermédiaire (28) et d'une roue intermédiaire (30) et un premier étage à pignons coniques (20) doté d'un pignon conique (34) et d'une couronne (36) ; et
un deuxième essieu moteur (14 ; 113) qui est relié par entraînement au premier essieu moteur (12 ; 112) et comprend un deuxième étage à pignons coniques (44) doté d'un pignon conique (48) et d'une couronne (50), dans lequel :

un rapport de transmission de l'étage intermédiaire (18) est différent de 1 ; et
un rapport de transmission total du premier essieu moteur (12 ; 112) correspond à un rapport de transmission total du deuxième essieu moteur (14 ; 113),
**caractérisé en ce**
**qu'**un nombre de dents de la roue intermédiaire (30) de l'étage intermédiaire (18) correspond à un nombre de dents de la couronne (50) du deuxième étage à pignons coniques (44), un nombre de dents du pignon conique (34) du premier étage à pignons coniques (20) correspond à un nombre de dents du pignon conique (48) du deuxième étage à pignons coniques (44) et/ou un nombre de dents du pignon intermédiaire (28) de l'étage intermédiaire (18) correspond à un nombre de dents de la couronne (36) du premier étage à pignons coniques (20).

2. Système de transmission d'essieu (10 ; 110) selon la revendication 1, dans lequel :
un nombre de dents du pignon intermédiaire (28) de l'étage intermédiaire (18) et un nombre de dents de la roue intermédiaire (30) de l'étage intermédiaire (18) ne présentent pas de facteur commun entier supérieur à 1,0.

3. Système de transmission d'essieu (10 ; 110) selon la revendication 1 ou la revendication 2, dans lequel :
le pignon intermédiaire (28) de l'étage intermédiaire (18) entraîne la roue intermédiaire (30) de l'étage intermédiaire (18).

4. Système de transmission d'essieu (10 ; 110) selon l'une des revendications précédentes, dans lequel :
le rapport de transmission de l'étage intermédiaire (18) est supérieur à 1.

5. Système de transmission d'essieu (10 ; 110) selon l'une des revendications précédentes, dans lequel :
l'étage intermédiaire (18) est réalisé sous forme d'étage à pignons droits.

6. Système de transmission d'essieu (10 ; 110) selon l'une des revendications précédentes, dans lequel :
le premier essieu moteur (12 ; 112) est réalisé sous forme d'essieu de transmission à relais.

7. Système de transmission d'essieu (10 ; 110) selon l'une des revendications précédentes, dans lequel :
le deuxième essieu moteur (14) est réalisé sous forme d'essieu de transmission solo.

8. Système de transmission d'essieu (10 ; 110) selon l'une des revendications précédentes, dans lequel :
le rapport de transmission total de l'étage intermédiaire (18) et du premier étage à pignons coniques (20) correspond à un rapport de transmission du deuxième étage à pignons coniques (44).

9. Système de transmission d'essieu (10 ; 110) selon l'une des revendications précédentes, dans lequel le dispositif d'entraînement d'essieu (10) est réalisé sous forme d'essieu-tandem, en particulier d'un véhicule utilitaire.

10. Système de transmission d'essieu (110) selon l'une des revendications 1 à 9, comprenant en outre :
au moins un autre essieu moteur (113) qui est réalisé sous forme d'essieu de transmission à relais.

11. Système de transmission d'essieu (110) selon la revendication 10, dans lequel :
l'au moins un autre essieu moteur (113) est disposé entre le premier essieu moteur et le deuxième essieu moteur.

12. Système de transmission d'essieu (110) selon la revendication 10 ou la revendication 11, dans lequel :
le rapport de transmission total du premier essieu moteur (112) correspond à un rapport de transmission total de l'au moins un autre essieu moteur (113).

13. Système de transmission d'essieu (110) selon l'une des revendications 10 à 12, dans lequel :

l'au moins un autre essieu moteur (113) comprend un autre étage intermédiaire (18) et un autre étage à pignons coniques (20) ; et
le rapport de transmission total de l'étage intermédiaire (18) et du premier étage à pignons coniques (20) correspond à un rapport de transmission total de l'autre étage intermédiaire (18) et de l'autre étage à pignons coniques (20).

14. Système de transmission d'essieu (10 ; 110) selon l'une des revendications précédentes, dans lequel le premier essieu moteur (12 ; 112) comprend :
un arbre d'entrée (24) destiné à être relié par entraînement à l'unité d'entraînement (17) ; et/ou un arbre traversant (26) destiné à être relié par entraînement au deuxième essieu moteur (14 ; 113) ; et/ou un différentiel longitudinal (16) qui est prévu de préférence en termes d'entraînement entre l'arbre d'entrée (24) d'une part et l'arbre traversant (26) et l'étage intermédiaire (18) d'autre part.

15. Véhicule automobile, en particulier véhicule utilitaire, comprenant un système de transmission d'essieu (10 ; 110) selon l'une des revendications précédentes.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005002858 B4
- EP 3045339 A1
- DE 102010052278 A1
- DE 102010034225 A1
- JP H08337125 A
- US 2889717 A